# EUROPÄISCHE PATENTSCHRIFT

(11) **EP 1 495 898 B1**
(45) Veröffentlichungstag und Bekanntmachung des Hinweises auf die Patenterteilung: **30.08.2006**
(21) Anmeldenummer: 04015702.6
(22) Anmeldetag: 03.07.2004
(51) Int. Cl.: B60K 15/05, E05B 65/12

(54) **Verriegelungseinrichtung und Verfahren zur Steuerung einer Verriegelungseinrichtung**
Locking device and control method for a locking device
Dispositif de verrouillage et méthode de contrôle d'un dispositif de verrouillage

(30) Priorität: 05.07.2003 DE 10330503
(43) Veröffentlichungstag der Anmeldung: 12.01.2005
(73) Patentinhaber: Hella KGaA Hueck & Co., 59552 Lippstadt (DE)
(72) Erfinder: Muschner, Andreas, 33100 Paderborn (DE); Langkau, Johannes, 59556 Lippstadt (DE); von der Ahe, Wilfried, 33106 Paderborn (DE); Kleine-Weischede, Jost, 59174 Kamen (DE); Gössmann, Georg, 59519 Möhnesee (DE)

(56) Entgegenhaltungen:
- EP-A- 1 040 953
- DE-A- 10 049 318
- DE-A- 10 109 827
- FR-A- 2 765 836
- US-A1- 2003 062 210

## Beschreibung

Die Erfindung betrifft eine Verriegelungseinrichtung gemäß dem Oberbegriff des Anspruchs 1 und ein Verfahren zur Steuerung einer Verriegelungseinrichtung gemäß dem Oberbegriff des Anspruchs 8.

Bekannte Verriegelungseinrichtungen, z. B. für Tankklappen, Handschuhfächer oder Türschlösser, sind zum Anschluss an Zentralverriegelungen von Kraftfahrzeugen vorgesehen. Sie weisen einen elektromotorischen Stellantrieb mit einem Motor, einem Verriegelungselement und einer Rückstellfeder auf. Das Verriegelungselement ist mit Hilfe des Motors in eine Entriegelungsposition und durch die Rückstellfeder in eine Verriegelungsposition fahrbar. Bei den aus der (nicht vorveröffentlichten) DE 102 12 783 und aus der DE 100 49 318 A1 bekannten Verriegelungseinrichtungen erfolgt das motorische Bewegen des Verriegelungselementes über eine linear verschiebbare Schubstange. Bei der in der DE 102 12 783 beschriebenen Verriegelungseinrichtung ist das Verriegelungselement als Verriegelungsbolzen zur Verriegelung einer Tankklappe und bei der in der DE 100 49 318 A1 beschriebenen Verriegelungseinrichtung ist das Verriegelungselement z. B. als ein Hebel einer Schließeinrichtung eines Kraftfahrzeuges ausgebildet.

Eine weitere aus der DE 101 09 827 A1 bekannte Verriegelungseinrichtung für eine Tür eines Kraftfahrzeuges weist ein als Fanghaken (Drehfalle) ausgebildetes Verriegelungselement auf. Dabei ist das Schloss der Tür durch einen als Aktuator bezeichneten Motor über einen Hebel, eine Sperrklinke und den Fanghaken zwischen einem entriegelten und einem verriegelten Zustand umschaltbar.

Eine Verriegelungseinrichtung, bei der die Verbindung des Motors zum Verriegelungselement eine Schubstange und/oder einen oder mehrere Hebel aufweist, benötigt verhältnismäßig viel Platz. Dies kann den Einbau in einer Tankklappenmulde oder in einem Türschloss erschweren.

Bei der in der WO 02/095171 A1 beschriebenen, gattungsgemäßen Verriegelungseinrichtung mit einem Gehäuse und einem elektromotorischen Stellantrieb weist der Stellantrieb einen Motor, ein Getriebe und eine über das Getriebe mit dem Motor verbundene Verriegelungseinheit auf. Die Verriegelungseinheit ist mit als Schließelementen bezeichneten Verriegelungselementen (Drehfallen) und einer als Spiralfeder ausgebildeten Rückstellfeder versehen. Die Verriegelungseinheit weist außerdem eine Welle, an der die Verriegelungselemente angeordnet sind, und einen ebenfalls an der Welle angeordneten Hebel mit zwei Armen auf. Das motorische Bewegen der Verriegelungselemente erfolgt über eine die Arme des Hebels auslenkende Steuerscheibe des Getriebes. Auch bei dieser Verriegelungseinrichtung werden platzbenötigende Hebel eingesetzt.

Ein Schalter z. B. zur Öffnung der Tankklappe, d. h. zur Ansteuerung des Stellantriebs kann sich z. B. im Innenraum des Kraftfahrzeuges vor dem Fahrersitz befinden und mit dem Stellantrieb verbunden sein. Die Tankklappe lässt sich mit diesem Schalter nur durch eine Person im Kraftfahrzeug öffnen.

Aus der (nicht veröffentlichten) DE 102 48 420 ist eine Verriegelungseinrichtung für eine Tankklappe mit einem Verriegelungsbolzen bekannt, bei der ein Schalter zum Öffnen der Tankklappe außen am Kraftfahrzeug betätigbar ist. Dazu ist an einem federnden Auswerfer für eine Lasche der Tankklappe ein an den Stellantrieb angeschlossener Druckschalter angeordnet.

Aufgabe der Erfindung ist es, eine Verriegelungseinrichtung mit geringem Platzbedarf gemäß dem Oberbegriff des Anspruchs 1 und ein Verfahren zur Steuerung einer Verriegelungseinrichtung gemäß dem Oberbegriff des Anspruchs 8 zu entwickeln, wobei ein Schalter in der Nähe der Verriegelungseinrichtung betätigbar ist.

Die Aufgabe ist durch die kennzeichnenden Merkmale des Anspruchs 1 und des Anspruchs 8 gelöst. In den Unteransprüchen sind vorteilhafte Ausführungsformen beschrieben.

Erfindungsgemäß wird an der Verriegelungseinrichtung, und zwar an der Verriegelungseinheit, ein Druckschalter so angeordnet, dass er bei Druck an einer Stelle im Bereich der Verriegelungseinrichtung, z. B. von außen auf eine geschlossenen Tankklappe, betätigt wird. Druck von außen auf eine Verriegelungslasche einer Tankklappe setzt sich am als Drehfalle ausgebildeten Verriegelungselement fort und bewirkt eine gewisse Drehung der Welle. Dies wird zur Betätigung des Druckschalters ausgenutzt, der sich am Verriegelungselement oder an einem zusätzlichen, an der Welle oder an der Rückstellfeder angeordneten Element befinden kann.

Gemäß Anspruch 2 kann die Verriegelungseinheit ein direkt mit dem Getriebe verbundenes, an der Welle angeordnetes Abtriebselement aufweisen. D. h. die Welle ist direkt durch das Getriebe mit der durch z. B. zwei Zahnräder vorgegebenen Untersetzung antreibbar. Eine platzaufwändige Zwischenschaltung unterschiedlich bewegter Hebel ist nicht notwendig.

Eine Anordnung der Rückstellfeder auf der Welle gemäß Anspruch 3 ist ebenfalls platzsparend und verringert die Zahl der Bauteile.

Eine Anordnung des Druckschalters am Verriegelungselement gemäß Anspruch 4 ermöglicht eine Anordnung außerhalb des Gehäuses der Verriegelungseinrichtung und ist damit von außen zugänglich. Eine Anordnung des Druckschalters am Abtriebselement innerhalb des Gehäuses gemäß Anspruch 5 schützt den Druckschalter vor äußeren Einflüssen, z. B. vor Verschmutzung.

Eine erfindungsgemäße Verriegelungseinrichtung kann z. B. an einer Tankklappe, die durch eine Feder im Tankklappenscharnier geöffnet wird, angeordnet sein. Bei einer alternativen Verriegelungseinrichtung kann gemäß Anspruch 6 das Verriegelungselement einen Auswerfer aufweisen.

Gemäß Anspruch 7 kann zwischen dem Druckschalter und dem Stellantrieb eine Rechnereinheit angeschlossen sein, in der z. B. Schaltbedingungen niedergelegt sind. Dadurch wird ermöglicht, dass der Stellantrieb nicht angesteuert wird, wenn die Verriegelungsstellung auch bei Druck z. B. auf eine Tankklappe beibehalten werden soll, z. B. in einer Parksituation oder bei kurzzeitiger versehentlicher Berührung.

Zur Steuerung der Verriegelungseinrichtung gemäß Anspruch 8 kann der Stellantrieb bei Betätigung des an der Verriegelungseinheit angeordneten Druckschalters benutzerfreundlich angesteuert werden.

Dabei kann die Ansteuerung des Stellantriebs gemäß Anspruch 9 nur dann erfolgen, wenn in einer zwischen dem Druckschalter und dem Stellantrieb geschalteten Rechnereinheit abgelegte Schaltbedingungen erfüllt sind.

Die Schaltbedingungen, von denen zur Ansteuerung des Motors eine oder mehrere erfüllt sein müssen, können gemäß Anspruch 10 aus der Art der Betätigung des Druckschalters oder z. B. einer Tankklappe ermittelt werden. Als Schaltbedingungen können dazu z. B. in der Rechnereinheit hinterlegt sein:
a) Erste von zwei aufeinander folgenden Betätigungen des Druckschalters
b) Mindestzeit t_{b} seit der letzten Ansteuerung von z. B. 5 bis 15 min
c) Mindestdauer t_{c} der Betätigung des Druckschalters von z. B. 1 bis 2 sec
d) Mindestkraft f_{d} bei der Betätigung der Tankklappe von z. B. 30 N
   Die Schaltbedingungen a) und b), die alternativ eingesetzt werden können, verhindern eine ungewollte Ansteuerung beim Schließvorgang. Dadurch wird ein sicheres Schließen z. B. einer Tankklappe nach dem Tanken ermöglicht ohne Gefahr, dass die Tankklappe beim Zudrücken sofort wieder geöffnet wird.
   Die zusätzlich einsetzbare Schaltbedingung c) verhindert ein versehentliches Öffnen bei einer unbeabsichtigten, kurzen Betätigung des Druckschalters, z. B. bei einer Tankklappe durch Ballberührung oder durch eine Berührung in einer Waschanlage.
   Die Erfüllung der ebenfalls zusätzlich einsetzbaren Schaltbedingung d) kann durch eine Druckmessung geprüft werden. Stattdessen kann die Aufbringung einer Mindestkraft durch an der Tankklappe angreifende federnde Elemente sichergestellt werden. Auch das Vorsehen einer Mindestkraft der Betätigung der Tankklappe verhindert ein versehentliches Öffnen.
   Die Mindestzeit t_{b,} die Mindestdauer t_{c} und der Mindestdruck p_{d} können parametriebar abgelegt sein, wobei ihre Werte beim Programmieren der Rechnereinheit an den Fahrzeugtyp z. B. abhängig von der Form der Tankklappe angepasst werden können.
   Bei einer Verriegelungseinrichtung in einem Kraftfahrzeug mit einer Zentralverriegelung können gemäß Anspruch 11 zusätzliche Schaltbedingungen aus dem Zustand der Zentralverriegelung und/oder dem Zustand des Fahrzeuges ermittelt werden. Als Schaltbedingungen können dazu in der Rechnereinheit hinterlegt sein:
e) Zentralverriegelung "auf"
f) Zentralverriegelung von innen "zu"
g) Maximal vergangene Zeit t_{g} seit Verschließen der Zentralverriegelung von außen
h) Zündung "aus"
i) Zündung "ein"
j) Geschwindigkeit "null"
k) Maximale geringe Geschwindigkeit vₖ

Die Schaltbedingung e) verhindert eine Ansteuerung und damit z. B. eine Öffnung einer Tankklappe bei geschlossener Zentralverriegelung. Die Schaltbedingung f) ermöglicht bei einer Tankklappe ein Betanken durch eine Bedienungsperson, während sich der Fahrer im Kraftfahrzeug befindet, und die Schaltbedingung g) ein Betanken nach Verschließen des Kraftfahrzeuges. Die Schaltbedingung g) verhindert eine Ansteuerung, wenn die Zündung des Fahrzeuges eingeschaltet ist. Alternativ kann mit der Schaltbedingung i) bei eingeschalteter Zündung getankt werden. Die Schaltbedingungen j) und k) verhindern eine Ansteuerung, wenn sich das Fahrzeug bewegt.

Eine oder mehrere der Schaltbedingungen e) bis k) können bei einer Betätigung des Druckschalters in der Rechnereinheit zusätzlich abgefragt werden, sie können auch permanent abgefragt werden und je nach Ergebnis der Abfrage den Druckschalter aktivieren oder deaktivieren.

Auch die Zeit t_{g} und die Geschwindigkeit vₖ können paramentriert abgelegt sein.

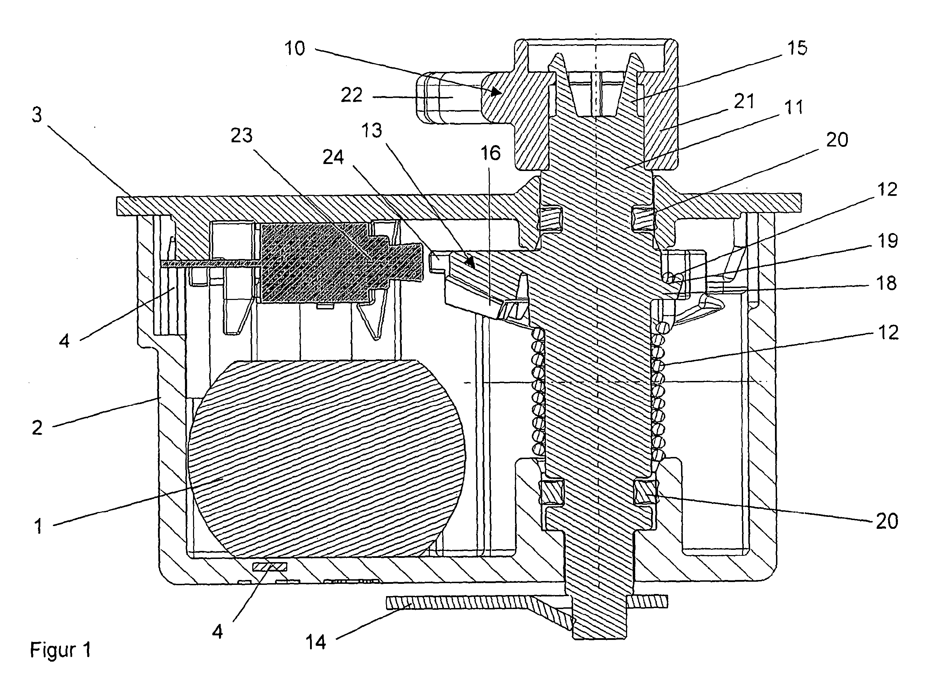

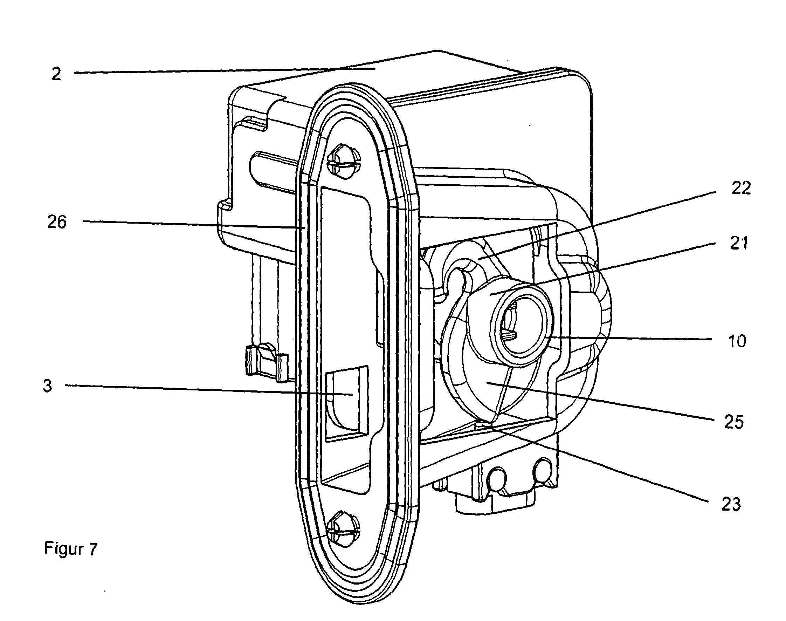

Die Erfindung wird anhand zweier in der Zeichnung schematisch dargestellter Beispiele von Verriegelungseinrichtungen für eine Tankklappe weiter erläutert. In den Figuren 1 bis 6 ist das erste Beispiel und in der Figur 7 das zweite Beispiel dargestellt.

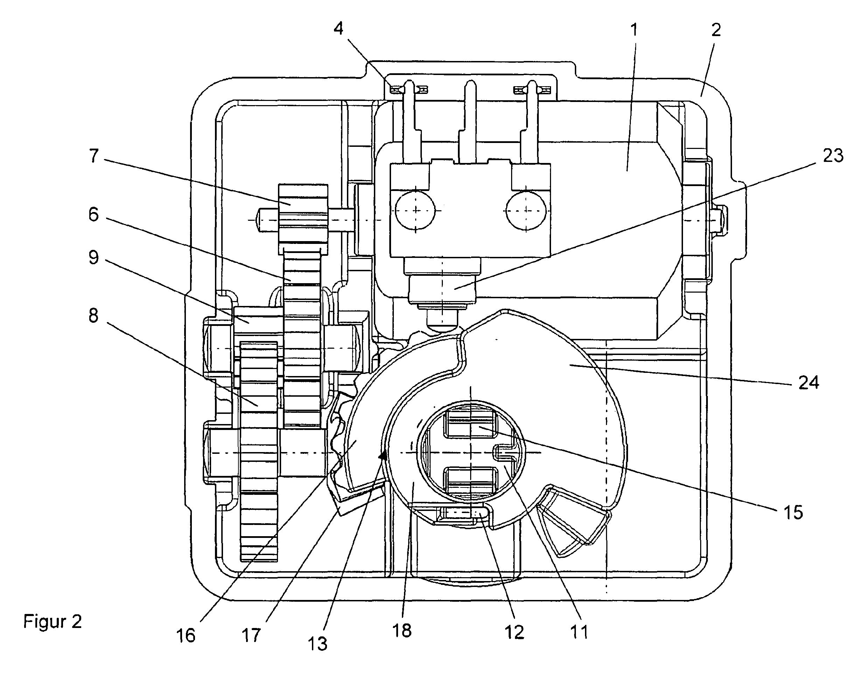

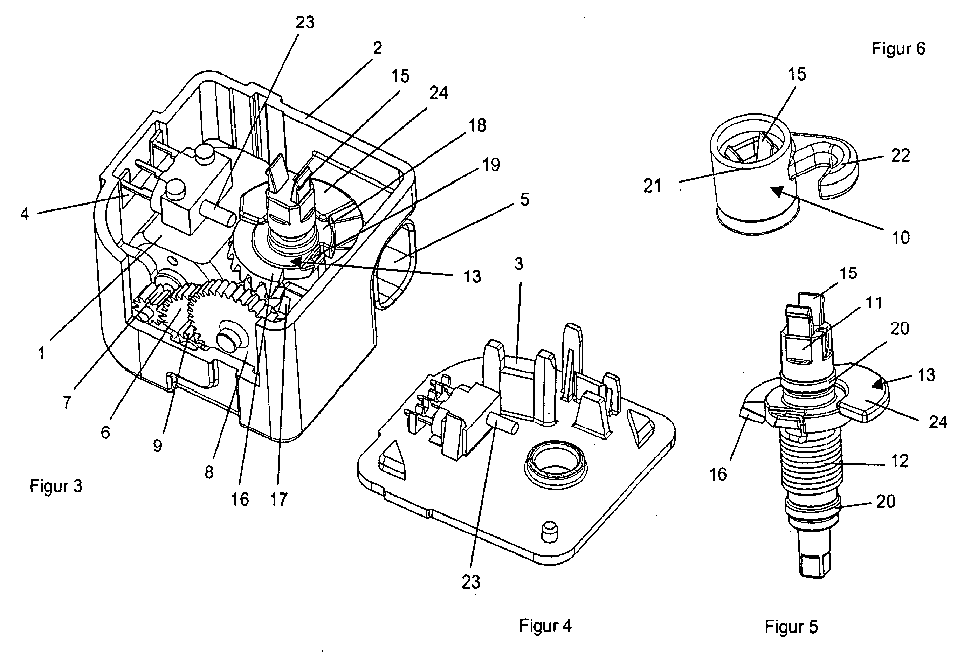

Figur 1 zeigt einen Schnitt durch die Verriegelungseinrichtung, der parallel zur und durch eine Achse einer Welle ihrer Verriegelungseinheit verläuft, und Figur 2 eine Draufsicht auf die Verriegelungseinrichtung ohne Deckel ihres Gehäuses und ohne Verriegelungselement. Die Figuren 3 bis 6 sind 3D-Darstellungen, und zwar Figur 3 der Verriegelungseinrichtung ohne Deckel und ohne Verriegelungselement, Figur 4 des Deckels mit Druckschalter, Figur 5 der Verriegelungseinheit ohne Verriegelungselement und Figur 6 des Verriegelungselementes. Figur 7 ist eine 3D-Darstellung des zweiten Beispiels.

Eine erfindungsgemäße Verriegelungseinrichtung des ersten Beispiels für eine Tankklappe weist ein Gehäuse und einen elektromotorischen Stellantrieb mit einem Motor 1, einem Getriebe und einer über das Getriebe mit dem Motor 1 verbundenen Verriegelungseinheit auf. Das im Spritzgußverfahren hergestellte Gehäuse besteht aus einem unteren Gehäuseteil 2, das einen Boden und vier Seitenwände bildet, und einem Deckel 3. In das untere Gehäuseteil 2 ist ein Stanzgitter 4 aus Metall eingespritzt. Das Stanzgitter 4 bildet elektrische Leitungen u. a. zwischen dem Motor 1 und einem Steckeranschluss 5 der Verriegelungseinrichtung.

Das Getriebe ist als Stufengetriebe mit zwei Zahnrädern ausgebildet, wobei ein Zahnkranz 6 des ersten als Stirnrad ausgebildeten Zahnrades ein Ritzel 7 des Motors 1 kämmt und ein Zahnkranz 8 des zweiten als Stirn-Kegelrad ausgebildeten Zahnrades eine Nabe 9 des ersten Zahnrades kämmt.

Die Verriegelungseinheit weist ein als Drehfalle 10 ausgebildetes Verriegelungselement, eine Welle 11, an der die Drehfalle 10 angeordnet ist, eine Rückstellfeder 12 und ein Abtriebselement 13 auf. Die Welle 11 ist senkrecht zu den Achsen des Motors 1 und der Zahnräder angeordnet. Sie ragt mit ihrem unteren Ende durch den Boden des unteren Gehäuseteils 2 und ist außerhalb des Gehäuses mit einem Hebel 14 zur Notentriegelung versehen.

Dieses untere Ende der Welle 11 kann in einer alternativen Ausführungsform als zweiter Abtrieb eingesetzt sein.

Die Welle 11 ragt mit ihrem oberen Ende durch den Deckel 3 des Gehäuses und weist an diesem Rastelemente 15 zur Aufnahme der Drehfalle 10 auf.

Das ebenfalls an der Welle 11 angeordnete Abtriebselement 13 umfasst ein Kegelradsegment 16, das mit einem Kegelrad 17 des zweiten Zahnrades kämmt. Das Kegelradsegment 16 ist als ein über einen Winkel von z.B. 120° ausgebildeter Vorsprung an einem ringförmigen Mittelteils 18 des Abtriebselementes 13 ausgebildet. Das Abtriebselement 13 ist einteilig mit der Welle 11 im Spritzgußverfahren herstellt.

Die Rückstellfeder 12 ist als eine um die Welle 11 gewickelte Schraubenfeder ausgebildet. Ihr oberer Schenkel ist in einer Vertiefung 19 des Abtriebselementes 13 und ihr unterer Schenkel ist (in der Zeichnung nicht zu sehen) am unteren Gehäuseteil 2 arretiert.

Die beiden Durchführungen der Welle 11 durch das Gehäuse sind über zwei Dichtringe 20 abgedichtet.

Die Drehfalle 10 umfasst ein Zylinderteil 21 und ein Hakenelement 22, das sich in einer Ebene senkrecht zur Wellenachse erstreckt und am Umfang des Zylinderteils 21 befestigt ist. Das Zylinderteil 21 ist als Hohlzylinder ausgebildet, in dessen Öffnung die Rastelemente 15 der Welle 11 eingerastet sind.

Das Hakenelement 22 der Drehfalle 10 ist so angeordnet, dass es eine von der Tankklappe abstehende und mit der Tankklappe in etwa senkrecht zur Welle 11 bewegbare Lasche in Verriegelungsposition verriegelt und bei Drehung der Welle 11 in Entriegelungsposition freigibt. Das Hakenelement 22 ist durch schräge Flächen so an die Lasche angepasst, dass bei Bewegung der Lasche durch Druck von außen das Hakenelement 22 um einen gewissen Winkel z. B. 20° in Richtung Entriegelungsposition bewegt wird.

Die Verriegelungseinrichtung weist einen als Mikroschalter ausgebildeten Druckschalter 23 auf, der an der Verriegelungseinheit angeordnet und über eine nicht dargestellte Rechnereinheit an den Motor 1 angeschlossen ist. Dazu sind Anschlüsse des Druckschalters 23 mit dem Stanzgitter 4 verbunden. In diesem Beispiel ist der Druckschalter 23 an dem Abtriebselement 13 der Verriegelungseinheit angeordnet. Dazu weist das Abtriebselement 13 ein scheibenförmiges Segment 24 zur Betätigung des Druckschalters 23 auf, das oberhalb des Kegelradsegmentes 16 und winkelversetzt dazu angeordnet ist, und das sich über einen Winkel der Größe des Winkels des Kegelradsegments 16 erstreckt. Der Druckschalter 23 ist so an dem Abtriebselement 13 angeordnet, dass er sich in Verriegelungsposition im Winkelbereich direkt vor dem Segment 24 befindet und bei Bewegung der Welle 11 in Richtung Entriegelungsposition durch das Segment 24 betätigt wird.

Die Vertiefung 19 im Mittelteils 18 des Abtriebselements 13 befindet sich in einem freien Winkelbereich, in dem weder das Kegelradsegment 16 noch das Segment 24 angeordnet sind.

Zum Entriegeln wird der Motor 1 des Stellantriebs durch den am Abtriebselement 13 angeordneten Druckschalter 23 in Abhängigkeit von in der Rechnereinheit abgelegten Schaltbedingungen angesteuert. Eine Ansteuerung des Motors 1 erfolgt bei Betätigung des Druckschalters 23 und der Erfüllung z. B. folgender aus der Art der Betätigung des Druckschalters 23 ermittelten Schaltbedingungen:
1) Erste von zwei aufeinanderfolgenden Betätigungen des Druckschalters 23 und
2) Mindestdauer t_{c} der Betätigung des Druckschalters 23 von 1 sec.
   Zusätzlich müssen noch die folgenden in der Rechnereinheit abgelegten Schaltbedingungen erfüllt sein:
3) Zentralverriegelung "auf" und
4) Zündung "aus".

Bei Betätigung des Druckschalters 23 prüft die Rechnereinheit, ob die vorgegebenen Schaltbedingungen erfüllt sind.

Zur Betätigung des Druckschalters 23 wird von außen auf die Tankklappe und damit auf die Lasche gedrückt. Die Lasche bewegt das Hakenelement 22 der Drehfalle 10 z. B. um einen Winkel von 20°. Dadurch wird der Druckschalter 23 über das Segment 24 betätigt. Bei Erfüllung der vorgegebenen Schaltbedingungen wird der Motor 1 durch die Rechnereinheit angesteuert und die Drehfalle 10 um ca. weitere 90° bis zu einem Anschlag in Entriegelungsposition gedreht. Der in der Zeichnung nicht dargestellte Anschlag ist am unteren Gehäuseteil 2 angeordnet. Währenddessen bleibt der Druckschalter 23 durch das Segment 24 weiter betätigt.

Die Tankklappe wird z. B. durch eine Rückstellfeder im Scharnier geöffnet.

Anschließend beendet die Rechnereinheit die Ansteuerung des Motors 1. Die Drehfalle 10 wird durch die Rückstellfeder 12 in Verriegelungsposition bewegt.

Beim Schließen der Tankklappe rastet die Lasche in das Hakenelement 22 der Drehfalle 10 ein. Dabei wird der Druckschalter 23 kurzzeitig betätigt, ohne dass es zu einer Ansteuerung des Motors 1 kommt, da die Schaltbedingung 1) nicht erfüllt ist. Dieses Signal des Druckschalters 23 kann von der Rechnereinheit ausgewertet und z. B. durch ein optisch oder akustisches Signal (Blinker oder Hupe) angezeigt werden. Es können auch weitere Funktionen am Kraftfahrzeug ausgelöst werden.

Eine Verriegelungseinrichtung des zweiten Beispiels (Figur 7) unterscheidet sich in folgenden Punkten von der des ersten Beispiels.

Der Druckschalter 23 ist außerhalb des Gehäuses an der Drehfalle 10 angeordnet.

Die Drehfalle 10 weist einen Auswerfer 25 auf. Der Auswerfer 25 ist als ein in der Ebene des Hakenelements 22 in Entriegelungsrichtung (in der Zeichnung entgegen des Uhrzeigersinns) dahinter angeordnetes, scheibenförmiges Segment ausgebildet, das sich über einen Winkel der Größe des Winkels des Kegelradsegmentes 16 erstreckt. Der Druckschalter 23 ist so am Auswerfer 25 angeordnet, dass er bei Druck auf die Tankklappe und damit auf die Lasche durch Bewegung des Hakenelementes 22 in Entriegelungsrichtung betätigt wird.

Bei einer Ansteuerung des Motors 1 nach Betätigung des Druckschalters 23 wird die Drehfalle 10 weiter in Entriegelungsrichtung gedreht. Der Auswerfer 25 trifft auf die Lasche und stößt sie nach außen. Der Druckschalter 23 wird in diesem Beispiel beim Fahren der Drehfalle 10 in Entriegelungsposition freigegeben.

Außerdem ist die Verriegelungseinrichtung mit einem am Deckel 3 des Gehäuses befestigten, in der Zeichnung durchsichtig dargestellten Halter 26 versehen.

### Bezugszeichenliste

- 1: Motor
- 2: unteres Gehäuseteil
- 3: Deckel des Gehäuses
- 4: Stanzgitter
- 5: Steckeranschluss
- 6: Zahnkranz des 1. Zahnrades
- 7: Ritzel des Motors
- 8: Zahnkranz des 2. Zahnrades
- 9: Nabe des 1. Zahnrades
- 10: Drehfalle
- 11: Welle
- 12: Rückstellfeder
- 13: Abtriebselement
- 14: Hebel zur Notentriegelung
- 15: Rastelement
- 16: Kegelradsegment
- 17: Kegelrad
- 18: Mittelteil
- 19: Vertiefung
- 20: Dichtring
- 21: Zylinderteil
- 22: Hakenelement
- 23: Druckschalter
- 24: Segment des Abtriebselementes
- 25: Auswerfer
- 26: Halter

## Patentansprüche

1. Verriegelungseinrichtung mit einem Gehäuse und mit einem elektromotorischen Stellantrieb, der einen Motor, ein Getriebe und eine über das Getriebe mit dem Motor verbundene Verriegelungseinheit aufweist, wobei die Verriegelungseinheit ein als Drehfalle ausgebildetes Verriegelungselement, eine Welle, an der das Verriegelungselement angeordnet ist, und eine Rückstellfeder umfasst und wobei das Verriegelungselement durch die Rückstellfeder in eine Verriegelungsposition und durch den Motor in eine Entriegelungsposition fahrbar ist, **gekennzeichnet durch** einen Druckschalter (23), der an der Verriegelungseinheit angeordnet ist und an den Motor (1) angeschlossen ist.

2. Verriegelungseinrichtung nach Anspruch 1, **dadurch gekennzeichnet, dass** die Verriegelungseinheit ein direkt mit dem Getriebe verbundenes, an der Welle (11) angeordnetes Abtriebselement (13) aufweist.

3. Verriegelungseinrichtung nach Anspruch 2, wobei die Rückstellfeder als Schraubenfeder ausgebildet ist, mit einem Schenkel an der Verriegelungseinheit und mit einem Schenkel unter Vorspannung am Gehäuse arretiert ist, **dadurch gekennzeichnet, dass** die Rückstellfeder (12) auf der Welle (11) angeordnet und mit einem Schenkel am Abtriebselement (13) arretiert ist.

4. Verriegelungseinrichtung nach einem der Ansprüche 1 bis 3, **dadurch gekennzeichnet, dass** der Druckschalter (23) am Verriegelungselement angeordnet ist.

5. Verriegelungseinrichtung nach Anspruch 2 oder 3, **dadurch gekennzeichnet, dass** der Druckschalter (23) innerhalb des Gehäuses am Abtriebselement (13) angeordnet ist.

6. Verriegelungseinrichtung nach einem der Ansprüche 1 bis 5, **dadurch gekennzeichnet, dass** das Verriegelungselement einen Auswerfer (25) aufweist.

7. Verriegelungseinrichtung nach einem der Ansprüche 1 bis 6, **dadurch gekennzeichnet, dass** der Druckschalter (23) über eine Rechnereinheit an den Motor (1) angeschlossen ist.

8. Verfahren zur Steuerung einer Verriegelungseinrichtung mit einem elektromotorischen Stellantrieb mit einer Verriegelungseinheit nach einem der Ansprüche 1 bis 7, bei dem ein als Drehfalle ausgebildetes Verriegelungselement der Verriegelungseinheit durch eine Rückstellfeder in Verriegelungsposition und nach Ansteuerung eines Motors des Stellantriebs in eine Entriegelungsposition gefahren wird, **dadurch gekennzeichnet, dass** der Motor (1) bei Betätigung eines an der Verriegelungseinheit angeordneten Druckschalters (23) angesteuert wird.

9. Verfahren nach Anspruch 8, **dadurch gekennzeichnet, dass** der Motor (1) durch eine mit dem Druckschalter (23) verbundene Rechnereinheit abhängig von in der Rechnereinheit abgelegten Schaltbedingungen angesteuert wird.

10. Verfahren nach Anspruch 9, **dadurch gekennzeichnet, dass** die Schaltbedingungen aus der Art der Betätigung des Druckschalters (23) ermittelt werden.

11. Verfahren nach Anspruch 9 oder 10, wobei die Verriegelungseinrichtung in einem Kraftfahrzeug mit einer Zentralverriegelung vorgesehen ist, **dadurch gekennzeichnet, dass** die Schaltbedingungen aus dem Zustand der Zentralverriegelung und/oder dem Zustand des Fahrzeuges ermittelt werden.

## Claims

1. Locking device having a housing, and having an electric motor driven actuator which has a motor, a transmission, and a locking unit connected with the motor by way of the transmission, the locking unit comprising a locking member constructed as a rotary catch, a shaft on which the locking member is arranged, and a return spring, and the locking member being movable into a locking position by the return spring and into an unlocking position by the motor, **characterised by** a pressure switch (23) which is arranged by the locking unit and connected to the motor (1).

2. Locking device according to claim 1, **characterised in that** the locking unit has a driven member (13) arranged on the shaft (11) and directly coupled to the transmission.

3. Locking device according to claim 2, in which the return spring is constructed as a helical spring retained at one end on the locking unit and at one end under pre-load on the housing, **characterised in that** the return spring (12) is arranged on the shaft (11) and is retained at one end on the driven member (13).

4. Locking device according to one of claims 1 to 3, **characterised in that** the pressure switch (23) is arranged by the locking member.

5. Locking device according to claim 2 or 3, **characterised in that** the pressure switch (23) is arranged by the driven member (13) within the housing.

6. Locking device according to one of claims 1 to 5, **characterised in that** the locking member has an ejector (25).

7. Locking device according to one of claims 1 to 6, **characterised in that** the pressure switch (23) is connected to the motor (1) by way of a computing unit.

8. Method for controlling a locking device having an electric motor driven actuator having a locking unit according to one of claims 1 to 7, in which a locking member of the locking unit, constructed as a rotary catch, is moved by a return spring into a locking position, and after activation of a motor of the actuator is moved into an unlocking position, **characterised in that** the motor (1) is activated upon operation of a pressure switch (23) arranged by the locking unit.

9. Method according to claim 8, **characterised in that** the motor (1) is activated by way of a computing unit, coupled with the pressure switch (23), in dependence of switching conditions entered **in that** computing unit

10. Method according to claim 9, **characterised in that** the switching conditions are ascertained from the manner in which the pressure switch (23) has been operated.

11. Method according to claim 9 or 10, in which the locking device is provided in a motor vehicle that has central lockings, **characterised in that** the switching conditions are ascertained from the state of the central locking and/or the state of the vehicle.

## Revendications

1. Système de verrouillage comportant un boîtier et un mécanisme de commande électromoteur qui présente un moteur, une transmission et une unité de verrouillage reliée au moteur via la transmission, l'unité de verrouillage comprenant un élément de verrouillage réalisé sous forme de loquet rotatif, un arbre sur lequel est agencé l'élément de verrouillage et un ressort de rappel, et l'élément de verrouillage étant déplaçable par le ressort de rappel jusque dans une position de verrouillage et par le moteur jusque dans une position de déverrouillage, **caractérisé par** un bouton-poussoir (23) qui est agencé sur l'unité de verrouillage et qui est branché au moteur (1).

2. Système de verrouillage selon la revendication 1, **caractérisé en ce que** l'unité de verrouillage présente un élément mené (13) relié directement à la transmission et agencé sur l'arbre (11).

3. Système de verrouillage selon la revendication 2, dans lequel le ressort de rappel est réalisé sous forme de ressort hélicoïdal, arrêté par une branche sur l'unité de verrouillage et par une branche sous précontrainte sur le boîtier, **caractérisé en ce que** le ressort de rappel (12) est agencé sur l'arbre (11) et arrêté par une branche sur l'élément mené (13).

4. Système de verrouillage selon l'une des revendications 1 à 3, **caractérisé en ce que** le bouton-poussoir (23) est agencé sur l'élément de verrouillage.

5. Système de verrouillage selon la revendication 2 ou 3, **caractérisé en ce que** le bouton-poussoir (23) est agencé à l'intérieur du boîtier sur l'élément mené (13).

6. Système de verrouillage selon l'une des revendications 1 à 5, **caractérisé en ce que** l'élément de verrouillage présente un éjecteur (25).

7. Système de verrouillage selon l'une des revendications 1 à 6, **caractérisé en ce que** le bouton-poussoir (23) est branché au moteur via une unité de calcul.

8. Procédé de commande d'un système de verrouillage comportant un mécanisme de commande électromoteur avec une unité de verrouillage selon l'une des revendications 1 à 7, dans lequel un élément de verrouillage réalisé sous forme de loquet rotatif, de l'unité de verrouillage, est déplacé par un ressort de rappel jusque dans une position de verrouillage et, après pilotage d'un moteur du mécanisme d'entraînement, il est déplacé jusque dans une position de déverrouillage, **caractérisé en ce que** le moteur (1) est piloté lorsqu'un bouton-poussoir (23) agencé sur l'unité de verrouillage est actionné.

9. Procédé selon la revendication 8, **caractérisé en ce que** le moteur (1) est piloté par une unité de calcul reliée au bouton-poussoir (23) en fonction de conditions de commutation mémorisées dans l'unité de calcul.

10. Procédé selon la revendication 9, **caractérisé en ce que** les conditions de commutation sont déterminées à partir du type d'actionnement du bouton-poussoir (23).

11. Procédé selon la revendication 9 ou 10, dans lequel le système de verrouillage est prévu dans un véhicule automobile comportant un verrouillage central, **caractérisé en ce que** les conditions de commutation sont déterminées à partir de l'état du verrouillage central et/ou de l'état du véhicule.
